# EUROPEAN PATENT APPLICATION

(11) **EP 2 194 450 A2**
(43) Date of publication of application: **09.06.2010**
(21) Application number: 09170527.7
(22) Date of filing: 17.09.2009
(51) Int. Cl.: G06F 3/048, H04N 5/445

(54) **Display apparatus and method of controlling the same**

(30) Priority: 08.12.2008 KR 20080123832
(71) Applicant: Samsung Electronics Co., Ltd., Suwon-si, Gyeonggi-do 442-742 (KR)
(72) Inventor: Lee, Dong-heon, Seoul (KR); Szilagy, Victor, London, Greater London N7 9JN (GB); Kwon, Yong-hwan, Gyeonggi-do (KR); Kim, Joon-hwan, Gyeonggi-do (KR); Kwon, Heui-jin, Gyeonggi-do (KR); Lee, Chang-soo, Seoul (KR); Lee, Jeong-yeong, Gyeonggi-do (KR)
(74) Representative: Robinson, Ian Michael

(57) **Abstract**

Disclosed are a display apparatus which displays contents and a method of controlling the same, the display apparatus including: a display unit; a user selection unit; a user interface generator which generates user interface information; an image processor; and a controller which controls the user interface generator to generate a guide image indicating a contents search mode on an edge of the display unit if performing a first operation to set up the contents search mode through the user selection unit, displays searched contents if performing a second operation to search contents while displaying the guide image, and controls the image processor to play selected contents if performing a third operation to select contents from searched contents.

## Description

### BACKGROUND OF INVENTION

### Field of Invention

Apparatuses and methods consistent with the present invention relate to a display apparatus and a method of controlling the same, and more particularly to a display apparatus which displays contents and a method of controlling the same.

### Description of the Related Art

In the past, televisions (TVs) generally displayed only broadcasting signals. However, TVs now can play a variety of contents. As such, and as display apparatuses come to realize more diverse functions, graphic user interfaces (UI) may become more complicated and have more options to control the display apparatus.

A user manipulates a remote controller or a button to control a display apparatus through a graphic UI. However, a complicated graphic UI may make the user manipulate the remote controller or the button more times and the user may have difficulty in controlling the display apparatus.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, an aspect of the present invention may provide a display apparatus which directly and conveniently searches contents and a method of controlling the same.

Another aspect of the present invention may provide a display apparatus which is capable of searching contents without using UI information including options, and a method of controlling the same.

The foregoing and/or other aspects of the present invention may be achieved by providing a display apparatus including: a display unit; a user selection unit; a user interface generator which generates user interface information; an image processor; and a controller which controls the user interface generator to generate a guide image indicating a contents search mode on an edge of the display unit if performing a first operation to set up the contents search mode through the user selection unit, displays searched contents if performing a second operation to search contents while displaying the guide image, and controls the image processor to play selected contents if performing a third operation to select contents from searched contents.

The user selection unit may include a touch panel and the first operation may include touching the touch panel over a predetermined time.

The second operation may include moving a touch signal which is input to the touch panel and which corresponds to movement in a predetermined direction.

The third operation may include at least one of not touching the touch panel over a predetermine time or moving a touch signal in a different direction from the predetermined direction in the second operation.

The guide image may include a highlight frame formed on an edge of the display unit.

If the highlight frame is displayed, contents currently displayed on the display unit contract within the highlight frame.

The user selection unit may include a mouse to move a cursor on the display unit.

The display apparatus may further include a broadcasting receiver to receive a broadcasting signal, wherein the controller controls the broadcasting receiver to sequentially select a channel of a broadcasting signal received via the broadcasting receiver in accordance with the performing of the second operation.

The display apparatus may further include a storage unit to store at least one kind of contents, wherein the controller controls the image processor to sequentially display contents in accordance with the performing of the second operation.

The controller may control the user interface generator to delete the guide image from the display unit if performing the third operation.

The display apparatus may further include a plurality of receivers to which contents are input, wherein the controller controls the image processor to play contents input through a selected receiver if performing a fourth operation to select the receivers via the user selection unit while displaying the guide image.

Another aspect of the present invention may be achieved by providing a method of controlling a display apparatus including a display unit, the method including: displaying a guide image indicating a contents search mode on an edge of the display unit if performing a first operation to set up the contents search mode; displaying searched contents if performing a second operation to search contents while displaying the guide image; and playing selected contents if performing a third operation to select contents from searched contents.

The display apparatus may include a touch panel and the first operation may include touching the touch panel over a predetermined time.

The second operation may include moving a touch signal which is input to the touch panel and which corresponds to movement in a predetermined direction.

The third operation may include at least one of not touching the touch panel over a predetermine time or moving a touch signal in a different direction from the predetermined direction in the second operation.

The guide image may include a highlight frame displayed on an edge of the display unit, and the method further may include contracting contents currently displayed on the display unit within the highlight frame if the highlight frame is displayed.

The display apparatus may further include a broadcasting receiver to receive a broadcasting signal, and the playing the contents comprises sequentially selecting a channel of a broadcasting signal received via the broadcasting receiver in accordance with the performing of the second operation.

The display apparatus may further include a storage unit to store at least one kind of contents, and the displaying the contents may include sequentially displaying stored contents in accordance with the number of times of the second operation.

The method may further include deleting the guide image from the display unit if performing the third operation.

The display apparatus may further include a plurality of receivers to which contents are input, and the method may further include displaying contents input through a selected receiver if performing a fourth operation to select the receivers while displaying the guide image.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a block diagram of a display apparatus according to one exemplary embodiment of the present invention;
FIGs. 2A to 2D illustrate search of contents on the display apparatus, an example of which is shown in FIG. 1;
FIG. 3 illustrates another exemplary embodiment of a guide image according to the display apparatus, an example of which is shown in FIG. 1;
FIG. 4 is a flow chart illustrating a method of controlling the display apparatus, an example of which is shown in FIG. 1;
FIG. 5 is a block diagram of a display apparatus according to another exemplary embodiment of the present invention; and
FIG. 6 is a block diagram of a display apparatus according to still another exemplary embodiment of the present invention.

### DETAILED DESCRIPTION OF EXEMPLARY EMBODIMENTS OF THE INVENTION

Below, exemplary embodiments of the present invention will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

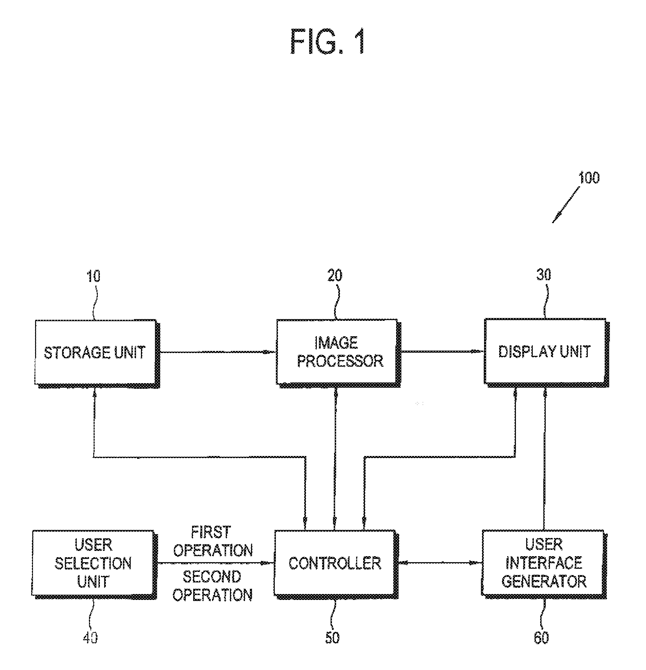

FIG. 1 is a block diagram of a display apparatus according to one exemplary embodiment of the present invention.

Referring to FIG. 1, a display apparatus 100 includes a storage unit 10, an image processor 20, a display unit 30, a user selection unit 40, a user interface (UI) generator 50, and a controller 60 controlling the foregoing elements. The display apparatus 100 may be provided as a reproducing device which is capable of reproducing contents stored inside or outside or may include a client terminal unit which is connected to a server or a portable terminal unit. Also, the display apparatus 100 may be realized by a TV processing a broadcasting signal and displaying it or a monitor connected to a main body of a computer. The contents may include a multimedia content such as a music file or moving image contents.

The storage unit 10 stores at least one kind of contents. The storage unit 10 includes not only a memory installed inside the display apparatus 100 but an external storage unit connectable to the display apparatus 100. The storage unit 10 is a contents source from which the display apparatus 100 is provided with contents. The storage unit 10 may be a separate component from the display apparatus 100. Contents may be supplied to the display apparatus 100 via a network communication unit (not shown).

The image processor 20 processes contents stored in the storage unit 10 to be displayed on the display unit 30. The image processor 20 includes a signal processing block, e.g., a codec, a scaler, or the like.

The display unit 30 displays contents processed by the image processor 20 and UI information generated by the UI generator 50, mentioned later. The display unit 30 may be a liquid crystal display (LCD) panel having liquid crystals, an organic light emitting diode (OLED) panel having OLEDs, or a plasma display panel (PDP), including a panel driver driving the panel.

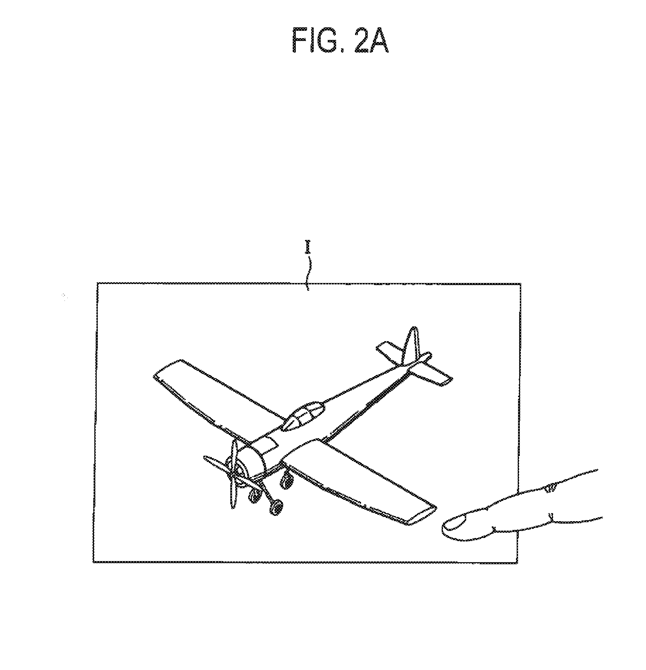

The user selection unit 40 generates different control signals to search contents to be output to the controller 60 according to a user's manipulation. In the present exemplary embodiment, the user selection unit 40 may be combined with the display unit 30, (e.g., a touch panel, as shown in FIG. 2A). That is, the touch panel may be disposed on the display unit 30 or provided in the display unit 30. A user performs various operations on the display unit 30 using a finger or a pointing device to input a control signal.

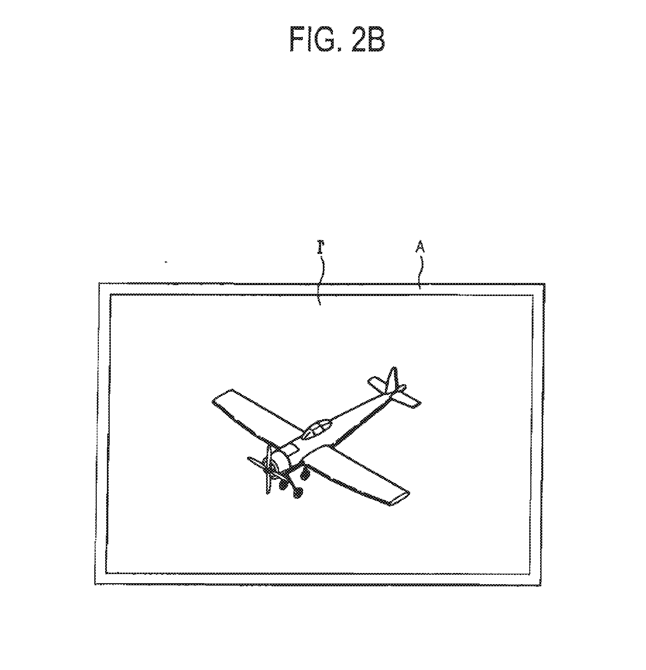

The controller 60 searches contents according to three operations carried out through the user selection unit 40 and reproduces them. First, a user conducts a first operation to set up a contents search mode via the user selection unit 40. The controller 60, receiving a control signal according to the first operation, controls the UI generator 50 to display a guide image illustrating the contents search mode on an edge of the display unit 30. FIGS. 2A to 2D are to illustrate search of contents on the display apparatus 100 of FIG. 1, where in FIG. 2A shows a user performs the first operation using his/her finger. The first operation is carried out by touching the user selection unit 40, e.g., a touch panel, for a predetermined time or more. When detecting a touch signal from the touch panel for a predetermined time or more, the controller 60 sets up a contents search mode to display a guide image. As shown in the drawings, the guide image in the present exemplary embodiment is a highlight frame displayed on the edge of the display unit 30. The highlight frame may have higher brightness or saturation to enable a user to easily recognize the contents search mode. According to the present exemplary embodiment, when a highlight frame is displayed on the display unit 30, currently reproduced contents (I) in FIG. 2A contract to be within the highlight frame (contents I' in FIG. 2B) so as not to be cut off or distorted. Alternatively, a control that contents contract may be omitted. Also, when there are no contents reproduced on the display unit 30, a contents search mode is possibly set up. In this case, contents contraction does not occur.

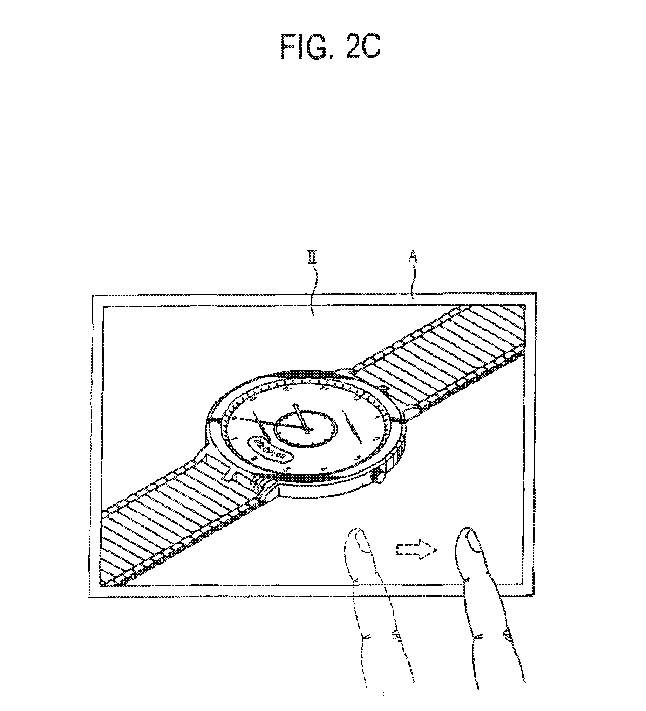

When the contents search mode is set up, contents are searched according to a second operation in FIG. 2C. When the second operation, (e.g., the touch signal which is input to the touch panel and which corresponds to movement in a predetermined direction) is conducted, the controller 60 controls the image processor 20 to display searched contents on the display unit 30. When the second operation is performed by the user moving his/her finger from left to right, contents stored in the storage unit 10 are sequentially reproduced in a predetermined order. Likewise, when the touch signal is moved from right to left, the contents are reproduced in the opposite order. FIG. 2C shows displaying contents (II), different from the contents (I') in FIG. 2B, according to the user's second operation.

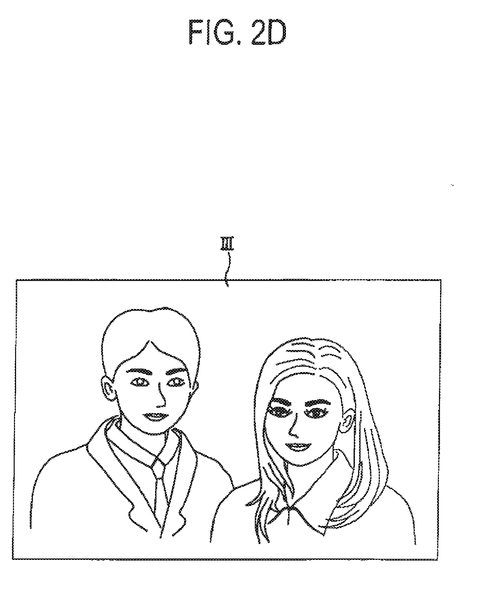

When a third operation is carried out to select one content from the contents searched by the user, the controller 60 controls the image processor 20 to display selected contents (III) as shown in FIG. 2D. For example, the controller 60 controls the image processor 20 to play or reproduce selected moving image contents. The third operation is conducted by not touching the touch panel for a predetermined time or more. If the user finds out desired contents while performing the second operation, he/she stops touching the touch panel. When a touch signal is not input over a predetermined time, the controller 60 determines that the third operation is carried out to select contents and plays the selected contents. The third operation may be realized by moving a touch signal in a different direction from the predetermined direction in the second operation in addition to stopping touching. The third operation may also be carried out by transferring a touch signal by more than the moving distance of the touch signal in the second operation or inputting a different action from the second operation. When one of the contents searched in the third operation is selected, the highlight frame (A) is deleted on the display unit 30 and the selected contents (III) are enlarged to the entire area of the display unit 30.

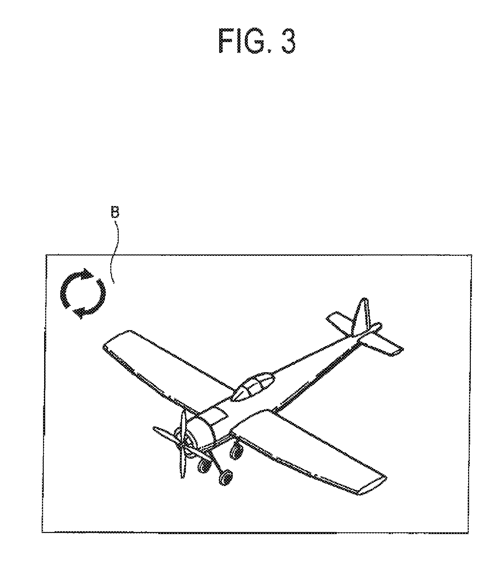

FIG. 3 illustrates another exemplary embodiment of a guide image according to the display apparatus of FIG. 1. Instead of the highlight frame, an icon (B) is displayed on the left upper corner to indicate that a contents search mode has been set up. The icon (B) does not overlap with contents displayed on the display unit 30 as the highlight frame does. The icon (B) may have a specific shape or color so that a user directly and conveniently recognizes that the contents search mode has bee set up.

According to the present exemplary embodiment, a guide image displayed as UI information does not include letters or options, and thus a user does not need to carry out complicated manipulation of buttons to search and select contents. The user can set up the contents search mode via the first operation and directly recognize the contents search mode to search contents via the guide image. Also, as guide information does not overlap with contents currently displayed, the user can search contents while maintaining the contents played.

In another exemplary embodiment, a user can search contents using various operations other than the first to third operations. For example, contents are searched by genres or in order of reproducing length. Also, if contents are selected, UI information to control a method of reproducing the contents, e.g., UI information to select quick reproduction, rewind, deletion, etc., may be created.

Alternatively, the user selection unit 40 may include a mouse to move a cursor (not shown) on the display unit 30. In this case, a user clicks the mouse once to set up the contents search mode, drags a cursor using the mouse to search contents, and double clicks to select contents. A variety of control signals are set up according to control of the mouse.

Alternatively, the user selection unit 40 may be a shortcut button provided on an external frame of the display apparatus 100 or a remote control. In this case, the shortcut button is selected once to select a contents search mode and repeatedly deselected and selected to carry out the second operation.

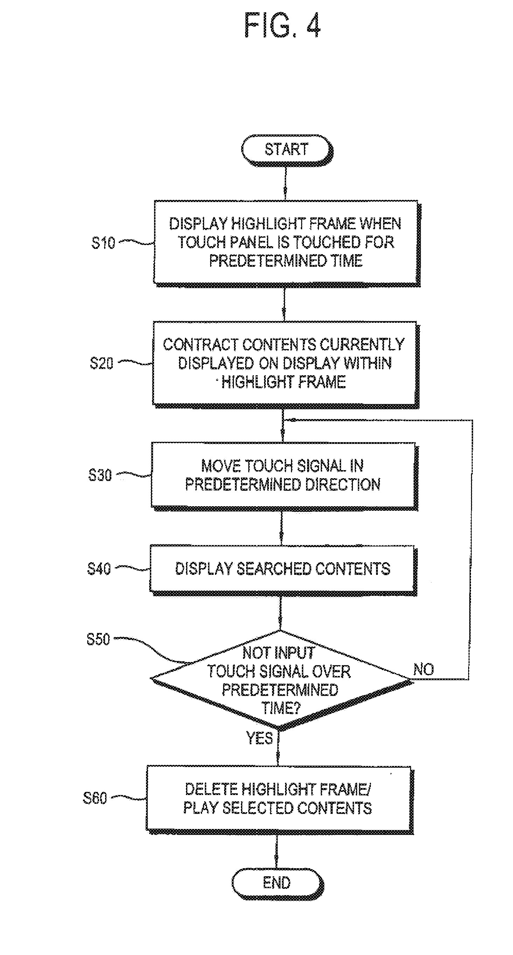

FIG. 4 is a flow chart illustrating a method of controlling the display apparatus of FIG. 1. Hereinafter, a method of controlling the display apparatus according to the present exemplary embodiment will be described in brief with reference to FIG. 4.

First, if the touch panel is touched over a predetermined time, the controller 60 sets up a contents search mode and displays a highlight frame (A) indicating the contents search mode on the display unit 30 (S10).

When the highlight frame (A) is displayed, the contents currently displayed on the display unit 30 contract within the highlight frame (S20).

When the contents search mode is selected via the first operation, the user carries out the second operation that a touch signal is input, wherein the touch signal corresponds to a movement in a predetermined direction (S30).

The controller 60 controls the image processor 20 to display contents searched corresponding to the second operation on the display unit 30 (S40).

After the second operation, the controller 60 determines whether a touch signal is not input over a predetermined time (S50). An illustrative example of the third operation includes the situation when a touch signal is not input.

When performing the third operation, the controller 60 considers currently searched contents to be selected, and then returns to a reproduction mode. That is, the highlight frame (A) is deleted, and the selected contents are enlarged to the entire area of the display unit 30 and played (S60).

If the third operation to select contents is not carried out, the second operation to search contents continues.

Also, the user may be allowed to repeat the first operation or to conduct other operations than the second and third operations to finish the contents search mode.

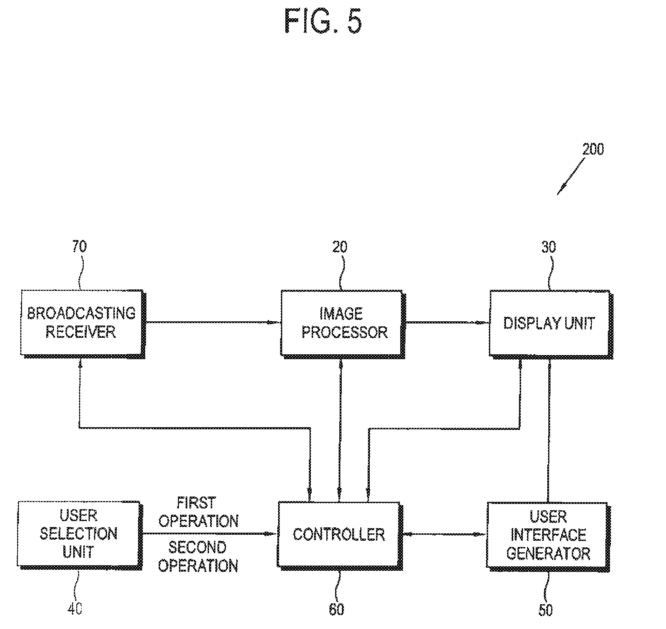

FIG. 5 is a block diagram of a display apparatus according to another exemplary embodiment of the present invention. As illustrated in the drawings, a display apparatus 200 includes a broadcasting receiver 70 which receives a broadcasting signal instead of the storage unit 10 in FIG. 1.

The broadcasting receiver 70 includes an antenna, a tuner, or the like which receives and demodulates a broadcasting signal and selects a broadcasting signal.

When carrying out the second operation by a user, a controller 60 controls the broadcasting receiver 70 to select a channel of a broadcasting signal. If the second operation is repeated, plural channels may be sequentially selected. That is, the sequentially selecting of a channel of a broadcasting signal received via the broadcasting receiver may be performed in accordance with the number of times of the second operation. When a channel is finally selected by the third operation, a broadcasting signal received to the final channel is displayed on a display unit 30.

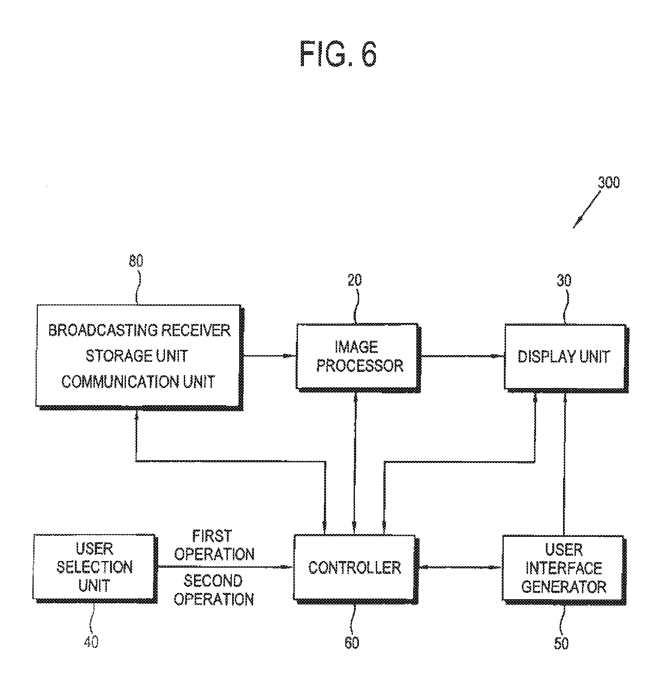

FIG. 6 is a block diagram of a display apparatus according to still another exemplary embodiment of the present invention. A display apparatus 300 according to the present exemplary embodiment includes a plurality of receivers 80 which receive contents, e.g., a broadcasting receiver, a storage unit, and a communication unit. The communication unit includes a network interface to be connected to a server via an internet protocol. In this case, the display apparatus 300 may include an IPTV. A user carries out four operations to select one of the receivers 80. When performing a fourth operation, a controller 60 controls an image processor 20 to display contents input through the selected receiver.

That is, in the present exemplary embodiment, the user selects one of the receivers 80 and searches contents input through the selected receiver as illustrated in the foregoing exemplary embodiments. The fourth operation may be set to have a different action from the first to third operations. In particular, the fourth operation may be a simple action for the user to facilely carry out.

An exemplary embodiment of the present invention enables the user to conveniently control a display apparatus through a simple and direct UI to search and select contents.

## Claims

1. A display apparatus comprising:
a display unit;
a user selection unit;
a user interface generator which generates user interface information;
an image processor; and
a controller which controls the user interface generator to generate a guide image indicating a contents search mode on an edge of the display unit if performing a first operation to set up the contents search mode through the user selection unit, displays searched contents if performing a second operation to search contents while displaying the guide image, and controls the image processor to play selected contents if performing a third operation to select contents from searched contents.

2. The display apparatus according to claim 1, wherein the user selection unit comprises a touch panel and the first operation comprises touching the touch panel over a predetermined time.

3. The display apparatus according to claim 2, wherein the second operation comprises moving a touch signal which is input to the touch panel and which corresponds to movement in a predetermined direction.

4. The display apparatus according to claim 3, wherein the third operation comprises at least one of not touching the touch panel over a predetermine time or moving a touch signal in a different direction from the predetermined direction in the second operation.

5. The display apparatus according to claim 1, wherein the guide image comprises a highlight frame displayed on the display unit and contents currently displayed on the display unit contract within the highlight frame.

6. The display apparatus according to claim 1, further comprising a broadcasting receiver to receive a broadcasting signal, wherein the controller controls the broadcasting receiver to sequentially select a channel of a broadcasting signal received via the broadcasting receiver in accordance with the performing of the second operation.

7. The display apparatus according to claim 1, further comprising a storage unit to store at least one kind of contents, wherein the controller controls the image processor to sequentially display contents in accordance with the performing of the second operation.

8. The display apparatus according to claim 1, wherein the controller controls the user interface generator to delete the guide image from the display unit if performing the third operation.

9. The display apparatus according to claim 1, further comprising a plurality of receivers to which contents are input, wherein the controller controls the image processor to play contents which are input through a selected receiver if performing a fourth operation to select the receivers via the user selection unit while displaying the guide image.

10. A method of controlling a display apparatus comprising a display unit, the method comprising:
displaying a guide image indicating a contents search mode on an edge of the display unit if performing a first operation to set up the contents search mode;
displaying searched contents if performing a second operation to search contents while displaying the guide image; and
playing selected contents if performing a third operation to select contents from searched contents.

11. The method according to claim 10, wherein the display apparatus comprises a touch panel and the first operation comprises touching the touch panel over a predetermined time, the second operation comprises moving a touch signal which is input to the touch panel and which corresponds to movement in a predetermined direction and the third operation comprises at least one of not touching the touch panel over a predetermine time or moving a touch signal in a different direction from the predetermined direction in the second operation.

12. The method according to claim 10, wherein the guide image comprises a highlight frame displayed on an edge of the display unit, and the method further comprises contracting contents currently displayed on the display unit within the highlight frame and deleting the guide image from the display unit if performing the third operation.

13. The method according to claim 10, wherein the display apparatus further comprises a broadcasting receiver to receive a broadcasting signal, and the playing the contents comprises sequentially selecting a channel of a broadcasting signal received via the broadcasting receiver in accordance with the performing of the second operation.

14. The method according to claim 10, wherein the display apparatus further comprises a storage unit to store at least one kind of contents, and the displaying the contents comprises sequentially displaying stored contents in accordance with the performing of the second operation.

15. The method according to claim 10, wherein the display apparatus further comprises a plurality of receivers to which contents are input, and the method further comprising displaying contents which are input through a selected receiver if performing a fourth operation to select the receivers while displaying the guide image.
